# EUROPEAN PATENT APPLICATION

(11) **EP 2 127 796 A1**
(43) Date of publication of application: **02.12.2009**
(21) Application number: 08703086.2
(22) Date of filing: 04.01.2008
(51) Int. Cl.: B23K 9/23, B23K 31/00, B23K 35/30, B23K 103/04

(54) **MULTIPASS BUTT-WELDED JOINT HAVING EXCELLENT BRITTLE CRACK PROPAGATION RESISTANCE, AND WELDED STRUCTURE**

(30) Priority: 05.01.2007 JP 2007000420; 27.12.2007 JP 2007337387
(71) Applicant: Nippon Steel Corporation, Tokyo 100-8071 (JP)
(72) Inventor: ISHIKAWA, Tadashi, Chiyoda-ku Tokyo 100-8071 (JP); INOUE, Takehiro, Chiyoda-ku Tokyo 100-8071 (JP); HASHIBA, Yuuji, Chiyoda-ku Tokyo 100-8071 (JP)
(74) Representative: Vossius & Partner
(86) International application number: PCT/JP2008/050222
(87) International publication number: WO 2008/082016

(57) **Abstract**

A multi-pass butt-welded joint having excellent brittle crack propagation resistance comprising a multi-pass butt-welded joint of steel plates **characterized in that** a front surface weld layer and a back surface weld layer of the welded joint have fracture resistances better than fracture resistances of the other weld layers.

## Description

### TECHNICAL FIELD

The present invention relates to a multi-pass butt-welded joint having an excellent property of arresting propagation of any brittle crack occurring inside the welded joint, that is, brittle crack propagation resistance, and a welded structure having that welded joint.

### BACKGROUND ART

When welding together steel plates to construct a welded structure, to reduce the construction costs or improve the welding work efficiency, usually the large heat input welding method is used, but in a welded joint formed by the large heat input welding method, the weld heat affected zone (hereinafter sometimes referred to as the "HAZ") falls in toughness. Further, the HAZ increases in width and the fracture toughness value Kc (indicator relating to brittle fracture) also falls.

In fracture of a welded joint, stress concentrates at a flaw formed at the time of welding, a crack forms starting from the flaw, and this crack propagates inside the weld joint. If the welded joint is low in fracture toughness value Kc, a crack easily forms and the crack propagates fast, so the welded joint suddenly fractures. That is, a welded joint fractures by brittle fracture.

To prevent brittle fracture of a welded joint, it is necessary to (i) inhibit the formation of cracks and (ii) arrest the propagation of cracks. For this reason, up to now, various welding methods securing toughness in the weld zone have been proposed.

For example, while a welding method for thick large sized welded steel pipe, a welding method of an X-groove which welds the initial layer by MIG welding, then welds the front layer and back layer by submerged arc welding to thereby weld the plate thickness as a whole has been proposed (see Japanese Patent Publication (A) No. 53-130242).

This welding method uses welding wire with a larger amount of Ni than the welding wire used in submerged arc welding at the time of MIG welding, secures toughness of the same extent as a submerged weld zone in the initial layer weld zone where weld cracks easily occur and toughness is difficult to secure, and levels the distribution of toughness in the plate thickness direction of the weld zone, but due to this there is difficult point that it is necessary to use expensive welding wire containing a large amount of Ni at the MIG weld zone.

Therefore, the applicant discovered a technique for sufficiently raising the fracture toughness value Kc from the standpoint of the above (i), proposed a large heat input butt-welded joint having excellent brittle fracture resistance (see Japanese Patent Publication (A) No. 2005-144552 and Japanese Patent Publication (A) No. 2006-088184) and, further, proposed a verification method for suitably verifying the brittle fracture resistance of the large heat input butt-welded joint based on the fracture toughness value Kc (see Japanese Patent Publication (A) No. 2006-088184).

The welded joint proposed by the applicant is useful in the point that it is resistant to brittle fracture and can raise the safety of a welded structure. Further, the above verification method is useful in designing a welded joint resistant to brittle fracture.

However, even in a welded joint designed so that no cracks occur in an ordinary stress load environment, it sometimes receives sudden or impact-like stress or irregular, complicated stress resulting in cracks.

In the past, in a butt-welded joint of TMCP steel plates having a plate thickness of 25 mm or so, any brittle crack is deflected to the base material side due to the action of residual stress inside the welded joint, so it was believed that if raising the brittle crack propagation resistance of the base material, it would be possible to guide any brittle crack occurring inside the welded joint to the base material to arrest it.

For example, to lower the residual stress in the weld zone as a whole, the welding method of partially using a welding material with a low transformation temperature containing a large amount (for example 11%) of Ni and utilizing a welding pass for martensite transformation from austenite has been proposed (see Japanese Patent Publication (A) No. 2000-033480). However, the weld zone resulting from this welding method has a structure of a martensite structure, so is extremely high in strength. Ultimately, even if a weld zone containing a large number of Ni, it often is lower in toughness than surrounding weld zones not containing Ni.

Further, in recent years, along with the increasingly larger size of welded structures and simplification of structures, it has become possible to set the design stress higher, so in the case of the high strength thick-gauge steel plates now starting to be used, any brittle crack occurring at a butt-welded joint, depending on the extent of the fracture resistance value of the welded joint, is not deflected to the base material side, but is propagated along the HAZ. This fact was learned as a result of fracture tests of the inventors (see Abstract of Papers at Welded Structure Symposium 2006, p. 195 to 202).

Further, the inventors learned that in the case of steel plates of a plate thickness of, for example, 70 mm or more, a welded joint is formed with a large distribution of toughness in the plate thickness direction and that even if for example a reinforcement plate is fillet welded crossing the welded joint, any brittle crack will not be caught by the reinforcement plate, but will propagate along the weld metal part or HAZ and the welded joint will fracture.

Therefore, based on the judged facts, the inventors proposed a welded joint and welding method having excellent brittle crack propagation arrest performance comprising removing part or all of a region where a butt-welded joint of a vertical member and a fillet welded joint of a horizontal member cross, using repair welding to form weld metal having excellent toughness containing Ni in a content of 2.5 mass% or more having compressive residual stress (see Japanese Patent Publication (A) No. 2005-111520) or weld material having excellent fracture toughness having an arrest performance (K_{Ca} value) of 2000N/mm^{1.5} or more (see Japanese Patent Publication (A) No. 2006-075874), deflecting a direction of crack propagation to the high toughness or high arrest performance weld metal surroundings even when a brittle crack is propagated along the longitudinal direction of the butt weld zone of the vertical member, and arresting crack propagation at the base material part of the horizontal member.

These methods deflect a crack propagating along an FL (boundary between weld metal and heat affected zone of base material) mainly in a single pass large heat input butt-welded joint to the high arrest performance steel plate side to arrest it in the base material and thereby improve the safety of the butt-welded joint.

However, the inventors confirmed from the results of large-scale fracture tests of multi-pass butt-welded joints that in multi-pass butt-welded joints, cracks propagate inside the weld metal, so even if applying a method effective in conventional single pass large heat input butt-welded joints, a sufficient effect cannot be obtained in multi-pass butt-welded joints.

For this reason, technology is required for reliably arresting a brittle crack formed at a multi-pass butt-welded joint of steel plate having a plate thickness of 50 mm or more.

### DISCLOSURE OF THE INVENTION

The present invention has as its object to form a welded joint having an excellent characteristic of making propagation of a brittle crack inside a welded joint difficult and eventually arresting it even if propagating, that is, brittle crack propagation resistance, even if a brittle crack occurs inside a welded joint when butt welding steel plates by multi-pass welding. Further, the present invention has as its object to solve the above problem and provide a welded joint having an excellent brittle crack propagation resistance and a welded structure having the welded joint.

The inventors, based on these determined facts, engaged in in-depth research on techniques for solving the above problems. As a result, the inventors discovered that (x) if forming weld layers having a fracture resistance better than the fracture resistance of the other weld layers at the front surface and the back surface of a multi-pass welded joint (front surface weld layer and back surface weld layer), it is possible to arrest the propagation of a brittle crack in the longitudinal direction of the welded joint at the weld layers.

Further, the inventors discovered that (y) if forming at least one weld layer having a fracture resistance better than the fracture resistance of the other weld layers between the front surface weld layer and the back surface weld layer (fracture resistance layers), it is possible to arrest propagation of a brittle crack in the longitudinal direction of the welded joint.

Further, the inventors discovered that (z) if arranging, separated from each other, two or more weld pass parts of a weld metal having a fracture resistance lower than the fracture resistance of the weld metal of the surroundings between the front surface weld layer and back surface weld layer, it is possible to arrest propagation of a brittle crack in the longitudinal direction of the welded joint.

The present invention was made based on the above discoveries and has as its gist the following:
(1) A multi-pass butt-welded joint having excellent brittle crack propagation resistance comprising a multi-pass butt-welded joint of steel plates **characterized in that** a front surface weld layer and a back surface weld layer of said welded joint have fracture resistances better than fracture resistances of the other weld layers.
(2) A multi-pass butt-welded joint having excellent brittle crack propagation resistance as set forth in the above (1) **characterized in that** said front surface weld layer and back surface weld layer are formed by a weld metal with an amount of Ni 1% or more larger than the amount of Ni of the welding metal forming other weld layers.
(3) A multi-pass butt-welded joint having excellent brittle crack propagation resistance as set forth in the above (1) or (2) **characterized in that** said front surface weld layer and back surface weld layer are present continuously in a longitudinal direction of the welded joint.
(4) A multi-pass butt-welded joint having excellent brittle crack propagation resistance as set forth in the above (1) or (2) **characterized in that** said front surface weld layer and back surface weld layer are present discontinuously in a longitudinal direction of the welded joint.
(5) A multi-pass butt-welded joint having excellent brittle crack propagation resistance as set forth in the above (4) **characterized in that** said front surface weld layer and back surface weld layer are present in the longitudinal direction of the welded joint in lengths of 300 mm or more.
(6) A multi-pass butt-welded joint having excellent brittle crack propagation resistance as set forth in the above (4) or (5) **characterized in that** said front surface weld layer and back surface weld layer are present discontinuously in the longitudinal direction of the welded joint discontinuously at intervals of 400 mm or less.
(7) A multi-pass butt-welded joint having excellent brittle crack propagation resistance as set forth in any one of the above (1) to (6) **characterized in that** at least one weld layer between said front surface weld layer and back surface weld layer has a fracture resistance superior to a fracture resistance of other weld layers.
(8) A multi-pass butt-welded joint having excellent brittle crack propagation resistance as set forth in the above (7) **characterized in that** said at least one weld layer is formed continuously in a width direction of the welded joint.
(9) A multi-pass butt-welded joint having excellent brittle crack propagation resistance as set forth in the above (7) or (8) **characterized in that** said at least one weld layer is formed by a weld metal with an amount of Ni 1% or more larger than the amount of Ni of the welding metal forming other weld layers.
(10) A multi-pass butt-welded joint having excellent brittle crack propagation resistance as set forth in the above (9) **characterized in that** said at least one weld layer is a weld layer formed by the same welding method as the welding method forming the other weld layers.
(11) A multi-pass butt-welded joint having excellent brittle crack propagation resistance as set forth in the above (9) or (10) **characterized in that** said weld layers have a structure in which no martensite transformation has occurred.
(12) A multi-pass butt-welded joint having excellent brittle crack propagation resistance as set forth in any one of the above (7) to (9) **characterized in that** said at least one weld layer is present continuously in the longitudinal direction of the welded joint.
(13) A multi-pass butt-welded joint having excellent brittle crack propagation resistance as set forth in any one of the above (7) to (12) **characterized in that** said at least one weld layer is present discontinuously in the longitudinal direction of the welded joint.
(14) A multi-pass butt-welded joint having excellent brittle crack propagation resistance as set forth in the above (13) **characterized in that** said at least one weld layer is present continuously in the longitudinal direction of the welded joint in a length of 200 mm or more.
(15) A multi-pass butt-welded joint having excellent brittle crack propagation resistance as set forth in the above (13) or (14) **characterized in that** said at least one weld layer is present discontinuously in the longitudinal direction of the welded joint in a length of 400 mm or less.
(16) A multi-pass butt-welded joint having excellent brittle crack propagation resistance as set forth in any one of the above (1) to (6) **characterized in that** two or more weld pass parts having a fracture resistance inferior to the fracture resistance of the surrounding weld pass parts are present, separated from each other, between said front surface weld layer and back surface weld layer.
(17) A multi-pass butt-welded joint having excellent brittle crack propagation resistance as set forth in the above (16) **characterized in that** said weld pass parts with the inferior fracture resistance are present in a number of 1/3 or less of the total number of passes required for forming the welded joint.
(18) A multi-pass butt-welded joint having excellent brittle crack propagation resistance as set forth in the above (16) or (17) **characterized in that** said weld pass parts having an inferior fracture resistance are present, separated from each other, in the plate thickness direction of the welded joint.
(19) A multi-pass butt-welded joint having excellent brittle crack propagation resistance as set forth in any one of the above (16) to (18) **characterized in that** said weld pass parts having an inferior fracture resistance are present continuously in a longitudinal direction of the welded joint.
(20) A multi-pass butt-welded joint having excellent brittle crack propagation resistance as set forth in any one of the above (16) to (18) **characterized in that** said weld pass parts having an inferior fracture resistance are present discontinuously in a longitudinal direction of the welded joint.
(21) A multi-pass butt-welded joint having excellent brittle crack propagation resistance as set forth in the above (20) **characterized in that** said weld pass parts having an inferior fracture resistance have a length in the longitudinal direction of the welded joint of 100 mm to 400 mm.
(22) A multi-pass butt-welded joint having excellent brittle crack propagation resistance as set forth in the above (20) or (21) **characterized in that** said weld pass parts having an inferior fracture resistance are present discontinuously in the longitudinal direction of the welded joint at intervals of 200 mm to 400 mm.
(23) A multi-pass butt-welded joint having excellent brittle crack propagation resistance as set forth in any one of the above (16) to (22) **characterized in that** said weld pass parts having an inferior fracture resistance are formed by single passes or a plurality of passes.
(24) A multi-pass butt-welded joint having excellent brittle crack propagation resistance as set forth in any one of the above (14) to (21) **characterized in that** said weld pass parts having an inferior fracture resistance are weld pass parts formed by a weld material with an amount of Ni 1% or more lower than the amount of Ni of the welding material forming other weld pass parts.
(25) A multi-pass butt-welded joint having excellent brittle crack propagation resistance as set forth in the above (24) **characterized in that** said weld pass parts having an inferior fracture resistance are weld layers formed by the same welding method as the welding material forming the other weld pass parts.
(26) A multi-pass butt-welded joint having excellent brittle crack propagation resistance as set forth in the above (24) or (25) **characterized in that** said other weld pass parts have structures of structures in which no martensite transformation has occurred.
(27) A multi-pass butt-welded joint having excellent brittle crack propagation resistance as set forth in any one of the above (16) to (23) **characterized in that** said weld pass parts having an inferior fracture resistance are not tempered by heat of succeeding weld pass parts.
(28) A multi-pass butt-welded joint having excellent brittle crack propagation resistance as set forth in any one of the above (7) to (27) **characterized in that** said steel plates have plate thicknesses of 50 mm or more.
(29) A welded structure characterized by having a multi-pass butt-welded joint having excellent brittle crack propagation resistance as set forth in any one of the above (1) to (28).

According to the present invention, in multi-pass butt-welding of steel plates, it is possible to form a welded joint having excellent brittle crack propagation resistance. As a result, it is possible to construct a welded structure having welded joints having excellent brittle crack propagation resistance.

### BRIEF DESCRIPTION OF THE DRAWINGS

FIG. 1 is a view showing the results of a CCA test forming the basis of the present invention.
FIG. 2 is a view showing one embodiment of a multi-pass butt-welded joint of the present invention.
FIG. 3 is a view showing an embodiment of formation and propagation of a brittle crack in a welded joint of the present invention.
FIG. 4 is a view showing propagation and arrest of a brittle crack. (a) is a view showing an aspect of occurrence of plastic deformation and ductile fracture at a front surface weld layer and back surface weld layer, while (b) is a view showing an aspect in which a brittle crack is propagated to a certain extent and arrested.
FIG. 5 is a view showing the welded joint of the present invention in the case of a single bevel groove.
FIG. 6 is a view showing another embodiment of a multi-pass butt-welded joint of the present invention.
FIG. 7 is a view showing an embodiment of propagation and arrest of a brittle crack in a multi-pass butt-welded joint shown in FIG. 6.
FIG. 8 is a view showing still another embodiment of a multi-pass butt-welded joint of the present invention.
FIG. 9 is a view showing an embodiment of propagation and arrest of a brittle crack in a multi-pass butt-welded joint shown in FIG. 8.

### BEST MODE FOR CARRYING OUT THE INVENTION

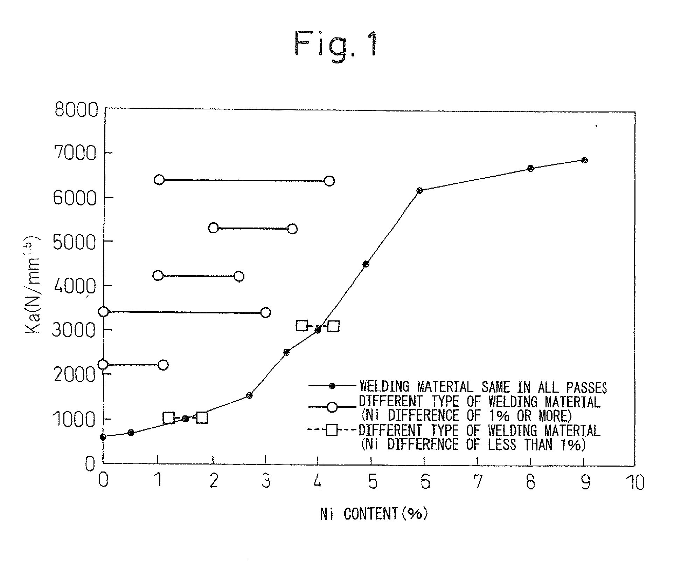

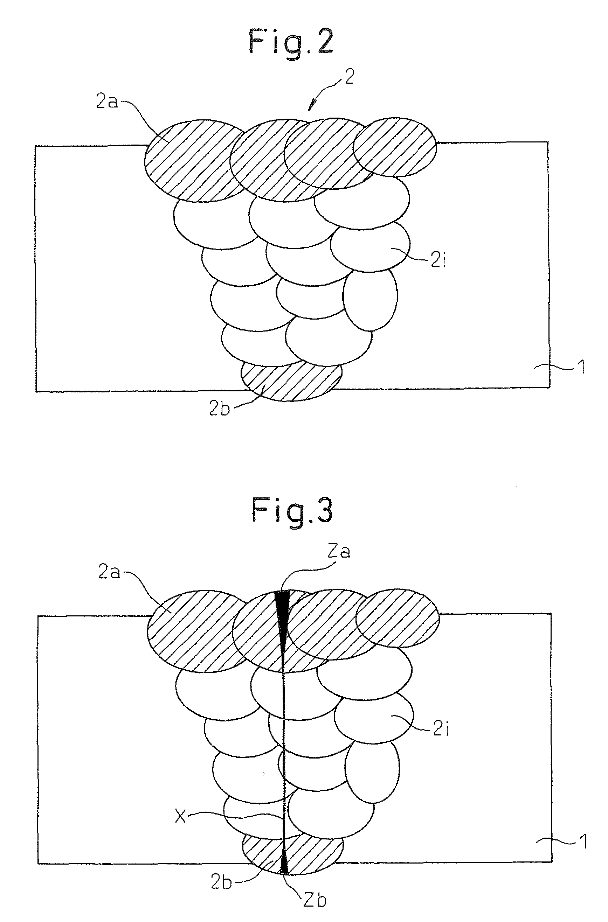

The present invention will be explained based on the drawings.
1) First, the technical idea of the present invention will be explained based on the following test results.
   Using only one type of welding material to prepare a welded joint, a CCA test piece was prepared to evaluate the brittle crack propagation arrest performance (Ka) of a weld metal part. The CCA test piece as a whole was cooled to -10°C to find the Ka of the weld metal part prepared using one type of welding material. The results are shown in FIG. 1 (in the figure, see • marks).
   Next, two types of welding materials were used to make a welded joint. At this time, the welded joint was produced so that the weld passes formed by the two types of welding materials became distributed as prescribed by the present invention. To evaluate the brittle crack propagation arrest performance (Ka) of the weld metal part, a CCA test piece was prepared. The CCA test piece as a whole was cooled to -10°C and the Ka was found by the CCA test method. The results are shown together in FIG. 1.
   The amounts of Ni of the welding materials used differ. The case where the difference in Ni content of the two types of welding materials used is 1% or more is shown in the figure by the ○ marks, while the case where the difference in Ni content is less than 1% is shown in the figure by the □ marks. From FIG. 1, it is learned that (i) the Ka of a welded joint prepared using welding materials of different amounts of Ni is superior to the Ka of a welded joint prepared using only welding materials containing a high Ni amount. Further, it is learned that (ii) by arranging weld passes with different Ka values, a performance of at least the Ka value of the weld passes is expressed.
   The present invention is founded on a technical idea based on the above discoveries.
   Note that the CCA test method (Compact-Crack-Arrest test method) is a test method for quantitatively evaluating brittle crack propagation arrest performance defined by the ASTM etc. and is performed as follows.
   A test piece is worked so that a center of the test piece, that is, a notched part, matches with the center of the weld metal part, the test piece as a whole is inserted into a cooling tank to cool it to a predetermined temperature, here, -10°C, and a load is applied to the test piece through a wedge.
   A displacement meter attached to an end of the test piece is used to calculate the K value applied to the notched tip of the test piece.
   If a brittle crack occurs at the notched tip and the crack propagates, the crack tip falls in K value in accordance with the crack propagation distance. That is, when the K value of the crack tip of the test piece falls to the brittle crack propagation arrest characteristic Ka value, the brittle crack is arrested, so the K value is calculated from the crack length at the time when the crack is arrested and the K value from the amount of displacement of the test piece at that time and evaluated as the Ka value.
2) Next, the inventions will be explained based on the drawings. FIG. 2 shows the embodiment of a multi-pass butt-welded joint of the present invention formed by welding a butt V-groove of steel plates 1 by multi-pass welding (below, referred to as "the welded joint of the present invention").

The present invention welded joint 2 shown in FIG. 2 is comprised of weld pass parts 2i formed by multi-pass welding, but based on the technical idea, at the front surface and back surface of the welded joint, a front surface weld layer 2a and a back surface weld layer 2b are formed by weld pass parts having a fracture resistance better than the fracture resistance of the other weld pass parts.

In this way, the present invention is characterized by arranging a front surface weld layer 2a and a back surface weld layer 2b having a fracture toughness better than the fracture toughness of other weld pass parts at the front surface and back surface of the welded joint so as to make the front layer part and back layer part of the welded joint regions resistant to brittle fracture.

That is, in the present invention, even if a brittle crack forms at the inside of the welded joint, due to the presence of the front surface weld layer 2a and back surface weld layer 2b, its propagation in the longitudinal direction of the welded joint can be arrested.

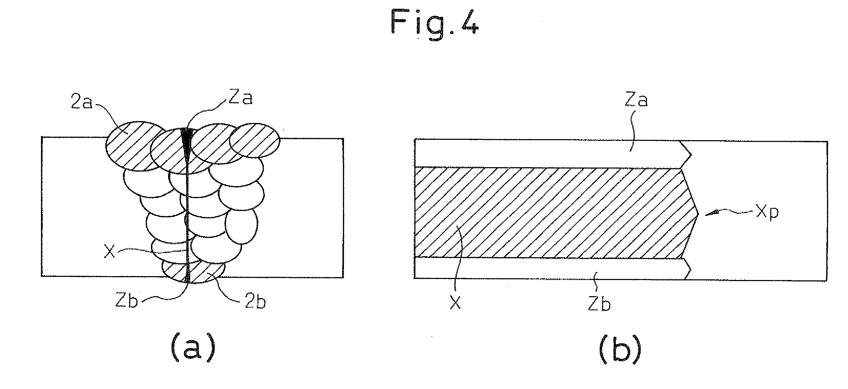

Here, the mechanism of expression of this action and effect will be explained based on FIG. 3 and FIG. 4.

At the inside of the welded joint, when a brittle crack forms starting from a weld zone flaw, the brittle crack propagates through weld metal of weld pass parts 2i having a fracture resistance lower than the fracture resistances of the front surface weld layer and back surface weld layer.

The high fracture resistance front surface weld layer and back surface weld layer are resistant to brittle fracture, so when a brittle crack X, as shown in FIG. 2, reaches the front surface weld layer and back surface weld layer, at those regions, no brittle fracture occurs, plastic deformation occurs, and shear lips Za and Zb are formed.

The brittle cracks Za and Zb propagate in the longitudinal direction of the welded joint in a state buried inside the weld metal between the front surface weld layer and back surface weld layer, so the tips of the brittle cracks become smaller in stress expansion coefficient, the driving force of the brittle cracks falls, and the brittle cracks are rendered into an easily arrested state.

FIG. 4 shows the state of propagation and arrest of a brittle crack in the longitudinal direction of the welded joint. FIG. 4(a) is the same as FIG. 3, but FIG. 4(b) shows the state of propagation and arrest of a brittle crack X in the longitudinal direction of the welded joint.

While a brittle crack X is propagating through the inside of a welded joint, at the front surface weld layer and back surface weld layer, as shown in FIG. 4(b), plastic deformation occurs and shear lips Za and Zb (ductile fracture region) are formed.

Along with the formation of the shear lips Za and Zb, the propagation energy of the brittle crack X is absorbed, so the brittle crack X cannot continue propagating through the welded joint in the longitudinal direction and is arrested at the position of Xp. As a result, it is possible to prevent brittle fracture of the welded joint and prevent fracture of the welded structure.

Above, as explained above, in the present invention, at the front surface and back surface of a multi-pass welded joint, a front surface weld layer and back surface weld layer having a fracture resistance better than the fracture resistance of the internal weld pass parts are formed by multi-pass welding. The invention is **characterized in that** the front surface weld layer and back surface weld layer have the action of arresting propagation of a brittle crack formed at an internal weld pass part due to a sudden or impact-like stress in the longitudinal direction of the welded joint.

The welded joint of the present invention is a joint comprised of steel plates butt-welded with each other by multi-pass welding. The plate thicknesses of the steel plates are not particularly limited.

The welded joint of the present invention may be a multi-pass welded joint formed by multi-pass welding. The invention may be applied to both large heat input welding and small heat input welding.

The groove shape of the steel plates is not limited to a V-shape, X-shape, K-shape, single bevel shape, etc. However, in the front surface weld layer and back surface weld layer, it is necessary to secure the required width in the width direction of the welded joint, so an X-groove or a K-groove, which enable a large width of the back surface weld layer to be secured, is preferable. Further, if considering the mechanical properties of the steel plates and utilization for arresting propagation of brittle cracks, an X-groove or a K-groove is more preferable.

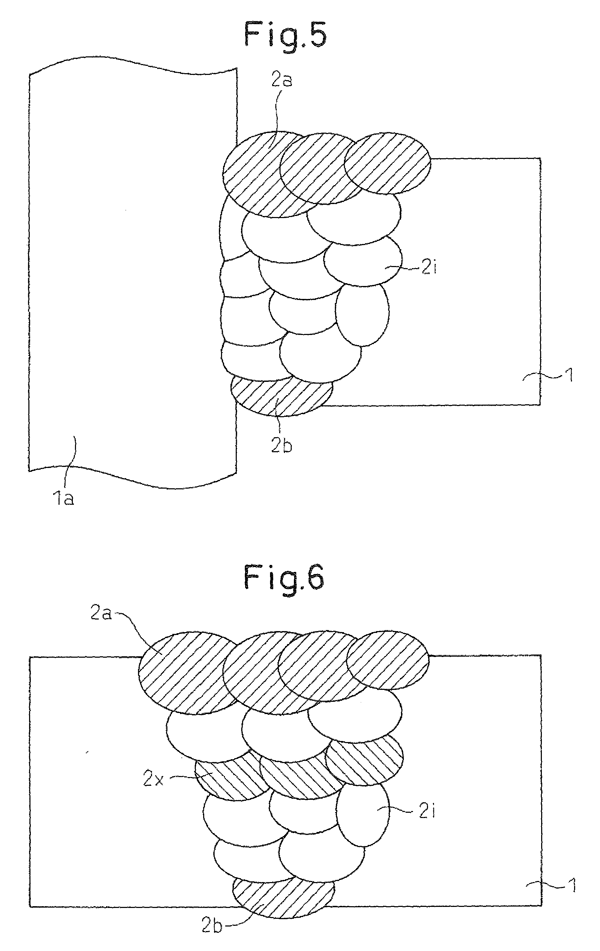

FIG. 5 shows a welded joint of the present invention in the case of a single bevel groove. As shown in FIG. 5, it is possible to apply the welded joint of the present invention even to a single bevel groove formed by making a steel plate 1a vertically abut against a steel plate 1. Further, it is possible to apply the welded joint of the present invention even to a single bevel groove formed by making steel plates of different plate thicknesses abut against each other.

The front surface weld layer and back surface weld layer of the present invention welded joint are preferably formed continuously in the longitudinal direction of the welded joint, but may also be formed discontinuously.

When forming the front surface weld layer and back surface weld layer discontinuously, if the weld layers have lengths in the longitudinal direction of the welded joint of 300 mm or more, it is possible to arrest any brittle crack by formation of shear lips.

Further, when forming the front surface weld layer and back surface weld layer discontinuously, the intervals of regions where the weld layers are present in the longitudinal direction of the welded joint are preferably 400 mm or less.

The speed of propagation of a brittle crack is slowed by the shear lips formed at the weld layers, but in the regions where the front surface weld layer and back surface weld layer are present, a brittle crack propagates without forming shear lips.

If the length of one brittle crack in the longitudinal direction of the welded joint exceeds 400 mm, the energy of the brittle crack becomes excessive. It is sometimes difficult to arrest brittle crack in a region in which there is no front surface weld layer and back surface weld layer. Therefore, the length in the longitudinal direction of the weld joint in the region in which there is no front surface weld layer and back surface weld layer is preferably 400 mm or less.

As a method for forming a front surface weld layer and back surface weld layer having better brittle fracture characteristics than the inside well pass parts, a method of using a welding material with an amount of Ni of 1% or more lower than the amount of Ni of the welding material used for forming the inside weld pass parts and welding under the same welding conditions as the welding conditions when welding the inside well pass parts is simple and preferable.

Japanese Patent Publication (A) No. 53-130242 discloses a welding method welding an X-groove part of a thick large sized welded steel pipe during which welding an initial layer by MIG welding, then welding a front layer and back layer by submerged arc welding to weld the plate thickness as a whole wherein the amount of Ni of the welding wire used for the MIG welding is increased over the amount of Ni of the welding wire used in the submerged arc welding.

This is because, at the initial layer, weld cracks easily occur and securing toughness is difficult, so welding wire with a larger amount of Ni is used to secure a toughness equal to that of the submerged arc weld zone and level the distribution of toughness of the weld zone in the plate thickness direction. This is basically different from the technical idea of the present invention.

The front surface weld layer and back surface weld layer may be single layers or may be multi-layers comprised of two or more weld layers stacked together. At this time, the two or more weld layers may be formed by the same welding material or may be formed by welding materials changed in the amount of Ni.

Further, the front surface weld layer and back surface weld layer may be formed by the same welding method as the welding method forming the other weld pass parts or may be formed by a different welding method.

The welded joint of the present invention can form a front surface weld layer and a back surface weld layer by adjusting the Ni content of the welding material under normal welding conditions. The weld layers preferably have a structure of a structure where no martensite transformation has occurred.

Japanese Patent Publication (A) No. 2000-033480 proposes a welding method for reducing the residual stress in the weld zone as a whole by partially using a welding material with a low transformation temperature containing a large amount (for example 11%) of Ni and utilizing a welding pass for martensite transformation from austenite.

However, the weld zone formed by this welding method has a structure of a martensite structure, so is extremely high in strength. Ultimately, even if a weld zone containing a large number of Ni, it often is lower in toughness than surrounding weld zones not containing Ni. Therefore, in the present invention, a structure not undergoing martensite transformation even when containing a large amount of Ni is preferable.

Note that, the front surface weld layer and back surface weld layer of the present invention need only be weld layers having better fracture resistances than the internal weld pass parts. The means for raising the fracture resistances to the fracture resistance of the internal weld pass parts or more is not limited to just raising the amount of Ni of the welding material. It is possible to form the front surface weld layer and back surface weld layer, then heat treat the weld layers or, further, for example, peen the layers by an ultrasonic device etc.

If the plate thickness of the welded joint is 50 mm or less, due to the effect of the shear lips formed at the front surface weld layer and back surface weld layer, it is possible to arrest any brittle crack propagating through a multi-pass welded joint, but if the plate thickness of the welded joint is 50 mm or more, sometimes it is not possible to arrest a brittle crack in the longitudinal direction of the welded joint by just the effect of the shear lips formed at the front surface weld layer and back surface weld layer.

For this reason, to further improve the brittle crack propagation arrest performance of a welded joint of a plate thickness of 50 mm or more, in addition to the effect of the shear lips formed at the front surface weld layer and back surface weld layer, the weld pass inside the plate thickness is suitable controlled.

In the present invention welded joint, as shown in FIG. 6, at the weld pass parts 2i between the front surface weld layer 2a and the back surface weld layer 2b, it is also possible to form an intermediate weld layer 2x better in fracture resistance of the weld pass parts (however, equal to or lower than the fracture resistance of the front surface weld layer and back surface weld layer) continuously across the width direction of the welded joint.

The intermediate weld layer 2x having excellent fracture resistance is comprised of a plurality of weld pass parts 2i, each formed by a single pass of welding using a welding material having better fracture resistance than the welding material forming the other weld pass parts, for example, a welding material having an amount of Ni 1 mass% or more greater than the amount of Ni of the welding material forming the other weld pass parts, connected in the width direction of the welded joint.

Note that, the intermediate weld layer may be a single layer or may be a multi-layer comprised of two or more intermediate weld layers stacked together. At this time, it is possible to form the two or more intermediate weld layers by the same welding material or form them by welding materials changed in the amount of Ni.

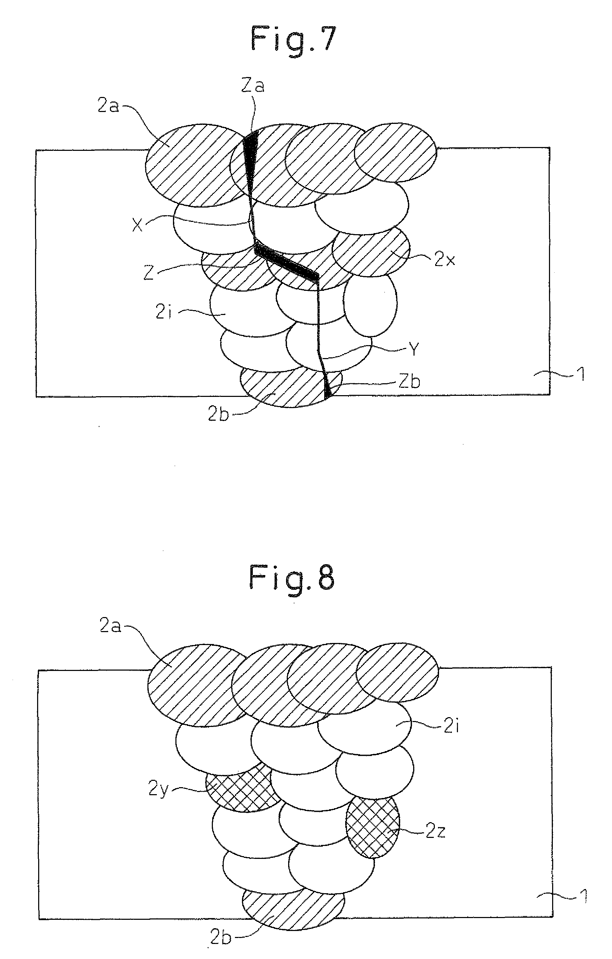

Here, FIG. 7 shows the state of propagation and arrest of a brittle crack in the state where there is an intermediate weld layer having excellent fracture resistance between the front surface weld layer and back surface weld layer.

If there is an intermediate weld layer 2x having excellent fracture resistance between the front surface weld layer and back surface weld layer, the distribution of toughness in the plate thickness direction of the welded joint suddenly changes at the intermediate weld layer 2x, so the fracture resistance of the welded joint is split to the two and bottom.

If an impact-like stress acts on the welded joint, for example, since the intermediate weld layer 2x is resistant to brittle fracture, a brittle crack, as shown in FIG. 7, is split into a brittle crack X of front surface side of plate thickness and a brittle crack Y of rear surface side of plate thickness, which propagate at those sides in the weld layers (weld pass parts 2i).

However, the brittle crack X is a crack with a narrow width in the plate thickness direction, so the stress expansion coefficient of the crack tip becomes smaller and the driving force causing propagation of the crack falls, therefore a brittle crack in the longitudinal direction of the welded joint is easily arrested.

If the brittle crack X propagates and the top end reaches the front surface weld layer 2a, as explained above, plastic deformation occurs at the front surface weld layer 2a, a shear lip Za (ductile fracture region) is formed, and the propagation energy of the brittle crack X is absorbed. Further, if the brittle crack Y propagates and the bottom end reaches the back surface weld layer 2b, similarly plastic deformation occurs at the back surface weld layer 2b, a shear lip Zb (ductile fracture region) is formed, and the propagation energy of the brittle crack X is absorbed.

If the bottom end of the brittle crack X and the top end of the brittle crack Y reach the intermediate weld layer 2x, plastic deformation occurs in the region Z between the brittle crack X and the brittle crack Y in the intermediate weld layer 2x and the propagation energies of the brittle crack X and brittle crack Y are absorbed along with ductile fracture.

As a result, the brittle crack X and brittle crack Y are rendered into a state where propagation is inhibited and arrest is easy. After propagating through the weld pass parts of the front surface side of plate thickness and rear surface side of plate thickness to a certain extent, they are arrested.

The intermediate weld layer is preferably present continuously in the longitudinal direction of the welded joint, but may also be present discontinuously. In the longitudinal direction of the welded joint, if a length of 200 mm or more is secured, due to the interaction between the front surface weld layer and back surface weld layer, it is possible to arrest propagation of any brittle crack occurring in a weld pass part at the inside of the welded joint.

However, when the front surface weld layer and back surface weld layer and the intermediate weld layer are formed discontinuously in the longitudinal direction of the welded joint, the discontinuous intervals become superposed. Further, if over 400 mm, the initially formed brittle crack will propagate and, finally, may grow into a brittle crack with a length in the longitudinal direction of the welded joint of 400 mm or more.

When the length of a brittle crack in the longitudinal direction of the welded joint becomes 400 mm or more, the energy of the brittle crack becomes excessive and arresting the propagation of the brittle crack becomes difficult, so the discontinuous interval of the intermediate weld part in the longitudinal direction of the welded joint is preferably 400 mm or less.

In the welded joint of the present invention, as shown in FIG. 8, it is also possible to form weld pass parts 2y and 2z having fracture toughnesses inferior to the fracture toughnesses of the weld pass parts 2i in the weld pass parts 2i between the front surface weld layer 2a and back surface weld layer 2b.

If there are the weld pass parts 2y and 2z among the weld pass parts 2i, the action and effect of the front surface weld layer 2a and back surface weld layer 2b, the action and effect of the weld pass parts 2i, and the action and effect of the weld pass parts 2x and 2y combine so that even if a brittle crack forms inside of the welded joint, the action and effect of quickly arresting its propagation are expressed.

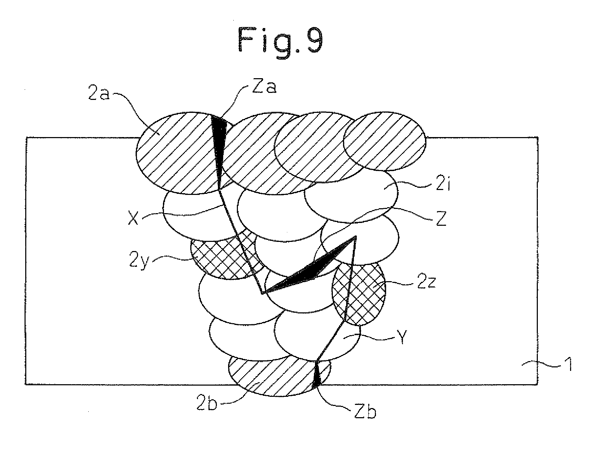

FIG. 9 shows the state of propagation and arrest of a brittle crack in the case where there are weld pass parts 2y and 2z having fracture toughnesses inferior to the fracture toughnesses of the weld pass parts 2i present between the front surface weld layer 2a and the back surface weld layer 2b.

If a sudden or impact-like stress acts on the welded joint, fractures preferentially occur at the weld pass parts 2y and 2z present dispersed inside the welded joint (with fracture resistances inferior to the surrounding weld pass parts) and brittle cracks X and Y are formed and propagate to the surrounding weld pass parts 2i. In this case, since the fracture resistances of the weld pass parts 2i are better than the fracture resistances of the weld pass parts 2y and 2z, the path of propagation of a brittle crack through the weld pass parts 2i is not regularly determined and becomes complicated.

Ultimately, a plurality of brittle cracks propagate from the weld pass parts 2y and 2z to the surrounding weld pass parts 2i, but the brittle cracks become cracks narrow in width in the plate thickness direction of the welded joint, so the stress expansion coefficients of the crack tips fall, the driving force causing propagation of the brittle cracks becomes small, and the cracks are easily arrested.

As shown in FIG. 9, when brittle cracks X and Y propagate from the weld pass parts 2y and 2z, since the region Z between the two brittle cracks X and Y avoids the brittle fracture regions, plastic deformation occurs in the region Z and the propagation energies of the brittle cracks are absorbed along with ductile fracture. As a result, the brittle cracks are rendered a state easily arrested in the longitudinal direction of the welded joint.

Further, when the top end of the brittle crack X reaches the front surface weld layer 2a and the bottom end of the brittle crack Y reaches the back surface weld layer 2b, plastic deformation occurs in the front surface weld layer 2a and back surface weld layer 2b, shear lips Za and Zb (ductile fracture regions) are formed, and the propagation energies of the brittle crack X and brittle crack Y are absorbed.

Two or more weld pass parts having fracture resistances inferior to the fracture resistances of the surrounding weld passes are necessary for making a brittle crack complicatedly split inside the welded joint. However, if the number of the weld pass parts exceeds 1/3 of the total number of passes forming the weld pass parts, the weld pass parts with low fracture resistances in the welded joint become dominant and, rather, a brittle crack easily propagates, so this is not preferable. The number of weld pass parts inferior in fracture characteristics is preferably 1/3 of the total number of passes.

Note that each weld pass part may be formed by a single pass or may be formed by a plurality of passes.

The weld pass parts usually are formed continuously in the longitudinal direction of the welded joint, but may also be formed discontinuously. If the weld pass parts with high possibilities of becoming fracture-generating regions are present continuously inside a welded joint in the longitudinal direction, a brittle crack will propagate through the weld pass parts and as a result there is a possibility of the cracks growing to extremely long brittle cracks passing through the welded joint in the longitudinal direction, so rather discontinuous formation is preferable.

When forming weld pass parts inferior in fracture characteristics discontinuously, the lengths of the weld pass parts in the longitudinal direction of the welded joint are preferably 100 mm or more. If the lengths of the weld pass parts in the longitudinal direction of the welded joint are 100 mm or more, it is possible to easily split a brittle crack.

On the other hand, if the lengths of the weld pass parts in the longitudinal direction of the welded joint exceed 400 mm, the length over which a brittle crack first propagates becomes too long, so this is not preferred. The lengths of the weld pass parts with the low fracture resistance in the longitudinal direction of the welded joint are preferably 100 mm to 400 mm.

If the interval of weld pass parts inferior in fracture resistance in the longitudinal direction of the welded joint is 200 mm or more, the possibility of arresting a brittle crack at the other weld pass parts rises, but if over 400 mm, a brittle crack formed at another weld pass part may propagate and grow into a single brittle crack of a length of 400 mm or more.

If the length of one brittle crack in the longitudinal direction of the welded joint exceeds 400 mm, the energy of the brittle crack becomes excessive. Even if the brittle crack is guided to a weld pass part inferior in fracture characteristics, it will be harder to split at the weld pass part. The interval of the weld pass parts inferior in fracture characteristics in the longitudinal direction of the welded joint is therefore preferably 200 mm to 400 mm.

As a method for forming a weld pass part inferior in brittle fracture characteristics compared with the surrounding weld pass parts, a method of using a welding material with an amount of Ni of 1% or more lower than the amount of Ni of the welding material used for forming the surrounding weld pass parts and welding under the same welding conditions is simple and preferable.

However, the method cannot be employed when the welding material forming the surrounding weld pass parts does not contain Ni, so in this case, a welding material with a high amount of C or a welding material without any Ti, B, or other structure refining elements added (all welding materials low in fracture resistance) may be used.

Further, it is also possible to lower the fracture resistance of the weld pass part by changing the welding conditions. For example, when forming a weld pass part inferior in fracture resistance, if making the heat input 130% or more of the heat input at the time of forming the surrounding weld pass parts, it is possible to form a large throat depth weld pass part.

Further, next, a weld pass part is formed on the large throat depth weld pass part under ordinary heat input conditions or at heat input conditions lower than ordinary heat input conditions. If welded in this way, the large throat depth weld pass part is not tempered by the heat of the succeeding weld pass part and becomes a weld pass part inferior in fracture resistance.

It is sufficient to form a weld pass part inferior in fracture resistance inside the welded joint. The method of formation is not limited to any specific method. For example, it is possible to use an insufficiently dried welding material and form only weld pass parts inferior in fracture resistance.

### EXAMPLES

Next, examples of the present invention will be explained, but the conditions of the examples are illustrations of conditions adopted for confirming the workability and effects of the present invention. The present invention is not limited to this illustration of conditions. The present invention can employ various conditions so long as not departing from the gist of the present invention and achieving the object of the present invention.

### (Example 1)

Welded joints were formed under the steel plate conditions and weld pass conditions shown in Tables 1 to 3 and were measured by brittle crack propagation tests for brittle crack propagation resistance. The results are shown in Tables 4 to 6. Note that the compositions of ingredients of the materials of the steel plates used are shown in Table 7.

**Table 1**

| No. | Steel plate | | | Welded joint | | | Basic weld pass | | | Specific weld pass A | | | | | | Remarks |
|---|---|---|---|---|---|---|---|---|---|---|---|---|---|---|---|---|
| | | | | | | | Weld metal | Weld conditions | | Arrangement conditions | | | Weld metal | Welding conditions | | |
| | Plate thick ness (mm) | Steel type | Yield strength(MPa) | Groove shape | Totalno. of passes | Total no. of layers | Ni (mass %) | Heat input amount (KJ/mm) | Temp. between passes (°C) | Thickness direction position | Long. direction length (mm) (Note 1) | Long. direction interval (mm) (Note 1) | Ni (mass%) | Heat input amount (KJ/mm) | Temp. between passes(°C) | |
| 1 | 70 | YP36 | 375 | V | 38 | 17 | 0 | 2.64 | 100 | 1, 2, 16, 17-th layer | Continuous | - | 2.5 | 2.64 | 100 | Inv. ex. |
| 2 | 60 | YP40 | 415 | V | 35 | 15 | 1 | 2.64 | 120 | 1, 2, 14, 15-th layer | 500 | 350 | 3.5 | 2.64 | 120 | Inv. ex. |
| 3 | 70 | YP40 | 421 | V | 38 | 17 | 0 | 2.64 | 100 | 1, 2, 3, 15, 16, 17-th layer | 400 | 200 | 6 | 2.64 | 100 | Inv. ex. |
| 4 | 100 | YP32 | 328 | X | 45 | 25 | 0 | 2.64 | 80 | 1, 2, 3, 15, 16, 17-th layer | 200 | 100 | 1.5 | 2.64 | 80 | Inv. ex. |
| 5 | 70 | YP32 | 330 | V | 38 | 17 | 0 | 2.64 | 120 | 1, 2, 16, 17-th layer | Continuous | - | 70 | 2.26 | 120 | Inv. ex. |
| 6 | 70 | YP36 | 390 | X | 37 | 17 | 0 | 2.64 | 100 | 1, 2, 16, 17-th layer | Continuous | - | 2.5 | 2.26 | 100 | Inv. ex. |
| 7 | 50 | YP47 | 495 | V | 22 | 12 | 1 | 1.62 | 100 | 1, 12-th layer | Continuous | - | 6 | 1.35 | 100 | Inv. ex. |
| 8 | 70 | YP40 | 415 | V | 38 | 17 | 1.4 | 2.64 | 80 | 1, 2, 16, 17-th layer | 600 | 300 | 9 | 2.26 | 80 | Inv. ex. |
| 25 | 70 | YP36 | 375 | V | 38 | 17 | 0 | 2.64 | 100 | None | - | - | - | - | - | Comp. ex. |
| 26 | 60 | YP40 | 415 | V | 35 | 15 | 1 | 2.64 | 120 | None | - | - | - | - | - | Comp. ex. |
| 27 | 70 | YP40 | 421 | V | 38 | 17 | 0 | 2.64 | 100 | None | - | - | - | - | - | Comp. ex. |
| 28 | 100 | YP32 | 328 | X | 45 | 25 | 0 | 2.64 | 80 | None | - | - | - | - | - | Comp. ex. |
| 29 | 70 | YP32 | 330 | V | 38 | 17 | 0 | 2.64 | 120 | None | - | - | - | - | - | Comp. ex. |
| 30 | 70 | YP36 | 390 | X | 37 | 17 | 0 | 2.64 | 100 | 8-th layer | 100 | 450 | 6 | 2.64 | 100 | Comp. ex. |
| 31 | 70 | YP32 | 330 | X | 35 | 17 | 0 | 2.64 | 100 | 7, 8, 9-th layer | 200 | 500 | 2.1 | 2.26 | 100 | Comp. ex. |
| 32 | 70 | YP36 | 390 | K | 36 | 17 | 0 | 2.64 | 100 | None | - | - | - | - | - | Comp. ex. |
| 33 | 50 | YP47 | 495 | V | 22 | 12 | 1 | 1.62 | 100 | None | - | - | - | - | - | Comp. ex. |
| 34 | 70 | YP40 | 415 | X | 38 | 17 | 1.4 | 2.64 | 80 | None | - | - | - | - | - | Comp. ex. |

| | | | | | | | | | | | | | | | | |
|---|---|---|---|---|---|---|---|---|---|---|---|---|---|---|---|---|
| *Note 1: Longitudinal direction length: Length of specific pass in weld longitudinal direction Longitudinal direction interval: Interval of specific pass in weld longitudinal direction | | | | | | | | | | | | | | | | |

**Table 2**

| No. | Steel plate | | | Welded joint | | | Basic weld pass | | | | Specific weld pass A | | | | | | | Remarks |
|---|---|---|---|---|---|---|---|---|---|---|---|---|---|---|---|---|---|---|
| | Plate thickness (mm) | Steel type | Yield strength (MPa) ) | Groove no. shape | Total no. of passes | Total no. of layers | | Ni (mass%) | Heat input amount (KJ/mm) | Temp. between passes (°C) | | Thick. direction position | Long. direction length (mm) (Note 1) | Long. direction interval (mm) (Note 1) | Ni (mcass%) | Heat input amount (KJ/mm) | Temp. between passes (°C) | |
| 9 | 70 | YP36 | 375 | V | 38 | 17 | MAG | 0 | 2.64 | 100 | MAG | 1, 2, 8, 16, 17-th layer | Continuous | - | 2.5 | 2.64 | 100 | Inv. ex. |
| 10 | 60 | YP40 | 415 | V | 35 | 15 | MAG | 1 | 2.64 | 120 | MAG | 1, 2, 7, 8, 14, 15-th layer | 500 | 350 | 3.5 | 2.64 | 120 | Inv. ex. |
| 11 | 70 | YP40 | 421 | V | 38 | 17 | MAG | 0 | 2.64 | 100 | MAG | 1, 2, 7, 10, 17-th layer | 400 | 200 | 6 | 2.64 | 100 | Inv. ex. |
| 12 | 100 | YP32 | 328 | X | 45 | 25 | MAG | 0 | 2.64 | 80 | MAG | 2, 3, 7, 8, 9, 15, 16, 17-th layer | 200 | 100 | 1.5 | 2.64 | 80 | Inv. ex. |
| 13 | 70 | YP32 | 330 | V | 38 | 17 | MIG | 0 | 2.64 | 120 | MIG | 1, 2, 5, 12, 17-th layer | Continuous | - | 70 | 2.26 | 120 | Inv. ex. |
| 14 | 70 | YP36 | 390 | X | 37 | 17 | MAG | 0 | 2.64 | 100 | MAG | 1, 2, 7, 8, 16, 17-th layer | Continuous | - | 2.5 | 2.26 | 100 | Inv. ex. |
| 15 | 50 | YP47 | 495 | V | 22 | 12 | SMAW | 1 | 1.62 | 100 | SMAW | 1, 7, 12-th layer | Continuous | - | 6 | 1.35 | 100 | Inv. ex. |
| 16 | 70 | YP40 | 415 | V | 38 | 17 | MAG | 1.4 | 2.64 | 80 | MAG | 1, 8, , 17-th layer | 600 | 300 | 9 | 2.26 | 80 | Inv. ex. |

| | | | | | | | | | | | | | | | | | | |
|---|---|---|---|---|---|---|---|---|---|---|---|---|---|---|---|---|---|---|
| *Note 1: Longitudinal direction length: Length of specific pass in weld longitudinal direction, Longitudinal direction interval: Interval of specific pass in weld longitudinal direction, MAG:MAG welding, MIG:MIG welding, and SMAW:Shielded metal arc welding | | | | | | | | | | | | | | | | | | |

**Table 3**

| No. | Steel plate | | | Welded joint | | | Basic weld pass | | | | | Specific weld pass A | | | | | | |
|---|---|---|---|---|---|---|---|---|---|---|---|---|---|---|---|---|---|---|
| | | | | | | | Welding method | Weld metal | Weld conditions | | Welding method | Arrangement conditions | | | Weld metal | Welding conditions | | Remarks |
| | Plate thickness (mm) | Steel type | Yield strength (Mpa) | Groove shape | Total no. of passes | Total no. of layers | | Ni (mass%) | Heat input amount (KJ/mm) | Temp. between passes (°C) | | Thickness direction position | Long. direction length (mm) (Note 1) | Long. direction interval (mm) (Note 1) | Ni (wt%) | Heat input amount (KJ/mm) | Temp. etween passes (°C) | |
| 17 | 70 | YP36 | 375 | V | 38 | 17 | MAG | 1. | 2.64 | 100 | MAG | 1, 2, 116, 17-th layer | Continuous | - | 2.5 | 2.64 | 100 | Inv. ex. |
| 18 | 60 | YP40 | 415 | V | 35 | 15 | MAG | 1 | 2.64 | 120 | MAG | 1, 2, 14, 15-th layer | 500 | 350 | 3.5 | 2.64 | 120 | Inv. ex. |
| 19 | 70 | YP40 | 421 | V | 38 | 17 | MAG | 1.5 | 2.64 | 100 | MAG | 1, 2, 3, 15, 16, 17-th layer | 400 | 200 | 6 | 2.64 | 100 | Inv. ex. |
| 20 | 100 | YP32 | 328 | X | 45 | 25 | MAG | 1 | 2.64 | 80 | MAG | 1, 2, 3, 15, 16, 17-th layer | 200 | 100 | 3.5 | 2.64 | 80 | Inv. ex. |
| 21 | 70 | YP32 | 330 | V | 38 | 17 | MAG | 1 | 2.64 | 120 | MAG | 1, 2, 16, 17-th layer | Continuous | - | 70 | 2.26 | 120 | Inv. ex. |
| 22 | 70 | YP36 | 390 | X | 37 | 17 | MAG | 1 | 2.64 | 100 | MAG | 1, 2, 16, 17-th layer | Continuous | - | 2.5 | 2.26 | 100 | Inv. ex. |
| 23 | 50 | YP47 | 495 | V | 22 | 12 | SMAW | 1 | 1.62 | 100 | SMAW | 1, 12-th layer | Continuous | - | 6 | 1.35 | 100 | Inv. ex. |
| 24 | 70 | YP40 | 415 | V | 38 | 17 | MAG | 1.4 | 2.64 | 80 | MAG | 1, 2, 16, 17-th layer | 600 | 300 | 9 | 2.26 | 80 | Inv. ex. |

| | | | | | | | | | | | | | | | | | | |
|---|---|---|---|---|---|---|---|---|---|---|---|---|---|---|---|---|---|---|
| *Note 1: Longitudinal direction length: Length of specific pass in weld longitudinal direction, Longitudinal direction interval: Interval of specific pass in weld longitudinal direction, MAG:MAG welding, MIG:MIG welding, and SMAW:Shielded metal arc welding | | | | | | | | | | | | | | | | | | |

**Table 4**

| No. | Brittle crack propagation test of welded joint | | | | Results | Remarks |
|---|---|---|---|---|---|---|
| | Load stress (MPa) | Test temperature (°C) | Total thickness of shear lip near crack arrest (mm) | Arrested crack length (mm) | | |
| 1 | 240 | -10 | 17 | 420 | Arrested | Inv. ex. |
| 2 | 240 | -10 | 16 | 650 | Arrested | Inv. ex. |
| 3 | 320 | -10 | 25 | 750 | Arrested | Inv. ex. |
| 4 | 200 | -10 | 24 | 350 | Arrested | Inv. ex. |
| 5 | 200 | -10 | 16 | 320 | Arrested | Inv. ex. |
| 6 | 240 | -10 | 16 | 830 | Arrested | Inv. ex. |
| 7 | 280 | -10 | 10 | 240 | Arrested | Inv. ex. |
| 8 | 240 | -10 | 16 | 315 | Arrested | Inv. ex. |
| 25 | 240 | -10 | - | 2500 | Propagated | Comp. ex. |
| 26 | 240 | -10 | - | 2500 | Propagated | Comp. ex. |
| 27 | 320 | -10 | - | 2500 | Propagated | Comp. ex. |
| 28 | 200 | -10 | - | 2500 | Propagated | Comp. ex. |
| 29 | 200 | -10 | - | 2500 | Propagated | Comp. ex. |
| 30 | 240 | -10 | - | 2500 | Propagated | Comp. ex. |
| 31 | 200 | -10 | - | 2500 | Propagated | Comp. ex. |
| 32 | 240 | -10 | - | 2500 | Propagated | Comp. ex. |
| 33 | 280 | -10 | - | 2500 | Propagated | Comp. ex. |
| 34 | 240 | -10 | - | 2500 | Propagated | Comp. ex. |

**Table 5**

| No. | Brittle crack propagation test of welded joint | | | | | Results | Remarks |
|---|---|---|---|---|---|---|---|
| | Load stress (MPa) | Test temperature (°C) | Total thickness of shear lip near crack arrest (mm) | No. of splitsof cracks | Arrested crack length (mm) | | |
| 9 | 240 | -10 | 17 | 2 | 320 | Arrested | Inv. ex. |
| 10 | 240 | -10 | 16 | 2 | 420 | Arrested | Inv. ex. |
| 11 | 320 | -10 | 25 | 3 | 390 | Arrested | Inv. ex. |
| 12 | 200 | -10 | 24 | 2 | 210 | Arrested | Inv. ex. |
| 13 | 200 | -10 | 16 | 3 | 190 | Arrested | Inv. ex. |
| 14 | 240 | -10 | 16 | 2 | 430 | Arrested | Inv. ex. |
| 15 | 280 | -10 | 10 | 2 | 190 | Arrested | Inv. ex. |
| 16 | 240 | -10 | 16 | 2 | 205 | Arrested | Inv. ex. |

**Table 6**

| No. | Specific weld pass B | | | | | | Brittle crack propagation test of welded joint | | | | | Results | Remarks |
|---|---|---|---|---|---|---|---|---|---|---|---|---|---|
| | Arrangement conditions | | | Weld metal | Weld conditions | | | | | | | | |
| | Pass no. | Long. direction length (mm) (Note 1) | Long. direction interval (mm) (Note 1) | Ni (wt%) | Heat input amount (KJ/mm) | Temp. between passes (°C) | Load stress (MPa) | Test temperature (°C) | Total thickness of shear lip near crack arrest (mm) | No. of splits of cracks | Arrested crack length (mm) | | |
| 17 | 10, 18, 30 | Continuous | - | 0 | 2.64 | 100 | 240 | -10 | 17 | 3 | 210 | Arrested | Inv. ex. |
| 18 | 10, 11, 26 | 500 | 350 | 0 | 2.64 | 120 | 240 | -10 | 16 | 3 | 320 | Arrested | Inv. ex. |
| 19 | 10, 16, 21, 32 | 400 | 200 | 0 | 2.64 | 100 | 320 | -10 | 25 | 4 | 290 | Arrested | Inv. ex. |
| 20 | 5, 10, 16, 39 | 200 | 100 | 0 | 2.64 | 80 | 200 | -10 | 24 | 4 | 210 | Arrested | Inv. ex. |
| 21 | 15, 16, 21, 22, 29, 30 | Continuous | - | 0 | 2.64 | 120 | 200 | -10 | 16 | 3 | 160 | Arrested | Inv. ex. |
| 22 | 8, 15, 21 | Continuous | - | 0 | 2.64 | 100 | 240 | -10 | 16 | 3 | 390 | Arrested | Inv. ex. |
| 23 | 4, 8, 11 | Continuous | - | 0 | 2.62 | 100 | 280 | -10 | 10 | 3 | 120 | Arrested | Inv. ex. |
| 24 | 11, 19, 23 | 600 | 300 | 0 | 3.05 | 80 | 240 | -10 | 16 | 3 | 180 | Arrested | Inv. ex. |

**Table 7**

| | | | | | | | |
|---|---|---|---|---|---|---|---|
| (mass%) | | | | | | | |

| Steel type | C | Si | Mn | P | S | Ni | Ti |
|---|---|---|---|---|---|---|---|
| YP32 | 0.13 | 0.19 | 1.28 | 0.01 | 0.003 | - | 0.01 |
| YP36 | 0.12 | 0.21 | 1.27 | 0.007 | 0.004 | - | 0.01 |
| YP40 | 0.11 | 0.21 | 1.3 | 0.006 | 0.003 | - | 0.01 |
| YP47 | 0.08 | 0.24 | 1.22 | 0.007 | 0.002 | 1.02 | 0.01 |

In Tables 1 to 3, the specific weld pass A is a weld pass changed in residual stress. It is a weld pass having a better fracture resistance than at least the basic pass formed at the front surface weld part and back surface weld part. The specific weld pass B is a weld pass having an inferior fracture resistance compared with the basic passes formed at the front surface weld layer and back surface weld layer.

From Tables 4 to 6, it is learned that in the invention examples of Nos. 1 to 24, even if brittle cracks propagate to a front surface weld zone and/or a back surface weld zone, they are short in length and are arrested.

### INDUSTRIAL APPLICABILITY

As explained above, according to the present invention, it is possible to construct a welded structure having welded joints having excellent brittle crack propagation resistance. Therefore, the present invention has great applicability in the field of construction of welded structures.

## Claims

1. A multi-pass butt-welded joint having excellent brittle crack propagation resistance comprising a multi-pass butt-welded joint of steel plates **characterized in that** a front surface weld layer and a back surface weld layer of said welded joint have fracture resistances better than fracture resistances of the other weld layers.

2. A multi-pass butt-welded joint having excellent brittle crack propagation resistance as set forth in claim 1 **characterized in that** said front surface weld layer and back surface weld layer are formed by a weld metal with an amount of Ni 1% or more larger than the amount of Ni of the welding metal forming other weld layers.

3. A multi-pass butt-welded joint having excellent brittle crack propagation resistance as set forth in claim 1 or 2 **characterized in that** said front surface weld layer and back surface weld layer are present continuously in a longitudinal direction of the welded joint.

4. A multi-pass butt-welded joint having excellent brittle crack propagation resistance as set forth in claim 1 or 2 **characterized in that** said front surface weld layer and back surface weld layer are present discontinuously in a longitudinal direction of the welded joint.

5. A multi-pass butt-welded joint having excellent brittle crack propagation resistance as set forth in claim 4 **characterized in that** said front surface weld layer and back surface weld layer are present in the longitudinal direction of the welded joint in lengths of 300 mm or more.

6. A multi-pass butt-welded joint having excellent brittle crack propagation resistance as set forth in claim 4 or 5 **characterized in that** said front surface weld layer and back surface weld layer are present discontinuously in the longitudinal direction of the welded joint discontinuously at intervals of 400 mm or less.

7. A multi-pass butt-welded joint having excellent brittle crack propagation resistance as set forth in any one of claims 1 to 6 **characterized in that** at least one weld layer between said front surface weld layer and back surface weld layer has a fracture resistance superior to a fracture resistance of other weld layers.

8. A multi-pass butt-welded joint having excellent brittle crack propagation resistance as set forth in claim 7 **characterized in that** said at least one weld layer is formed continuously in a width direction of the welded joint.

9. A multi-pass butt-welded joint having excellent brittle crack propagation resistance as set forth in claim 7 or 8 **characterized in that** said at least one weld layer is formed by a weld metal with an amount of Ni 1% or more larger than the amount of Ni of the welding metal forming other weld layers.

10. A multi-pass butt-welded joint having excellent brittle crack propagation resistance as set forth in claim 9 **characterized in that** said at least one weld layer is a weld layer formed by the same welding method as the welding method forming the other weld layers.

11. A multi-pass butt-welded joint having excellent brittle crack propagation resistance as set forth in claim 9 or 10 **characterized in that** said weld layers have a structure in which no martensite transformation has occurred.

12. A multi-pass butt-welded joint having excellent brittle crack propagation resistance as set forth in any one of claims 7 to 9 **characterized in that** said at least one weld layer is present continuously in the longitudinal direction of the welded joint.

13. A multi-pass butt-welded joint having excellent brittle crack propagation resistance as set forth in any one of claims 7 to 12 **characterized in that** said at least one weld layer is present discontinuously in the longitudinal direction of the welded joint.

14. A multi-pass butt-welded joint having excellent brittle crack propagation resistance as set forth in claim 13 **characterized in that** said at least one weld layer is present continuously in the longitudinal direction of the welded joint in a length of 200 mm or more.

15. A multi-pass butt-welded joint having excellent brittle crack propagation resistance as set forth in claim 13 or 14 **characterized in that** said at least one weld layer is present discontinuously in the longitudinal direction of the welded joint in a length of 400 mm or less.

16. A multi-pass butt-welded joint having excellent brittle crack propagation resistance as set forth in any one of claims 1 to 6 **characterized in that** two or more weld pass parts having a fracture resistance inferior to the fracture resistance of the surrounding weld pass parts are present, separated from each other, between said front surface weld layer and back surface weld layer.

17. A multi-pass butt-welded joint having excellent brittle crack propagation resistance as set forth in claim 16 **characterized in that** said weld pass parts with the inferior fracture resistance are present in a number of 1/3 or less of the total number of passes required for forming the welded joint.

18. A multi-pass butt-welded joint having excellent brittle crack propagation resistance as set forth in claim 16 or 17 **characterized in that** said weld pass parts having an inferior fracture resistance are present, separated from each other, in the plate thickness direction of the welded joint.

19. A multi-pass butt-welded joint having excellent brittle crack propagation resistance as set forth in any one of claims 16 to 18 **characterized in that** said weld pass parts having an inferior fracture resistance are present continuously in a longitudinal direction of the welded joint.

20. A multi-pass butt-welded joint having excellent brittle crack propagation resistance as set forth in any one of claims 16 to 18 **characterized in that** said weld pass parts having an inferior fracture resistance are present discontinuously in a longitudinal direction of the welded joint.

21. A multi-pass butt-welded joint having excellent brittle crack propagation resistance as set forth in claim 20 **characterized in that** said weld pass parts having an inferior fracture resistance have a length in the longitudinal direction of the welded joint of 100 mm to 400 mm.

22. A multi-pass butt-welded joint having excellent brittle crack propagation resistance as set forth in claim 20 or 21 **characterized in that** said weld pass parts having an inferior fracture resistance are present discontinuously in the longitudinal direction of the welded joint at intervals of 200 mm to 400 mm.

23. A multi-pass butt-welded joint having excellent brittle crack propagation resistance as set forth in any one of claims 16 to 22 **characterized in that** said weld pass parts having an inferior fracture resistance are formed by single passes or a plurality of passes.

24. A multi-pass butt-welded joint having excellent brittle crack propagation resistance as set forth in any one of claims 14 to 21 **characterized in that** said weld pass parts having an inferior fracture resistance are weld pass parts formed by a weld material with an amount of Ni 1% or more lower than the amount of Ni of the welding material forming other weld pass parts.

25. A multi-pass butt-welded joint having excellent brittle crack propagation resistance as set forth in claim 24 **characterized in that** said weld pass parts having an inferior fracture resistance are weld layers formed by the same welding method as the welding material forming the other weld pass parts.

26. A multi-pass butt-welded joint having excellent brittle crack propagation resistance as set forth in claim 24 or 25 **characterized in that** said other weld pass parts have structures of structures in which no martensite transformation has occurred.

27. A multi-pass butt-welded joint having excellent brittle crack propagation resistance as set forth in any one of claims 16 to 23 **characterized in that** said weld pass parts having an inferior fracture resistance are not tempered by heat of succeeding weld pass parts.

28. A multi-pass butt-welded joint having excellent brittle crack propagation resistance as set forth in any one of claims 7 to 27 **characterized in that** said steel plates have plate thicknesses of 50 mm or more.

29. A welded structure **characterized by** having a multi-pass butt-welded joint having excellent brittle crack propagation resistance as set forth in any one of claims 1 to 28.
